# EUROPÄISCHE PATENTSCHRIFT

(11) **EP 2 689 167 B1**
(45) Veröffentlichungstag und Bekanntmachung des Hinweises auf die Patenterteilung: **17.05.2017**
(21) Anmeldenummer: 12732808.6
(22) Anmeldetag: 20.06.2012
(51) Int. Cl.: F16J 15/10, F16J 15/12, F16J 15/32, H02B 1/044

(54) **BEFEHLS- UND MELDEVORRICHTUNG**
COMMAND AND ALERT DEVICE
DISPOSITIF DE COMMANDE ET DE SIGNALISATION

(30) Priorität: 05.07.2011 DE 102011078639
(43) Veröffentlichungstag der Anmeldung: 29.01.2014
(73) Patentinhaber: Siemens Aktiengesellschaft, 80333 München (DE)
(72) Erfinder: BAUMANN, Michael, 92546 Schmidgaden (DE)
(86) Internationale Anmeldenummer: PCT/EP2012/061865
(87) Internationale Veröffentlichungsnummer: WO 2013/004501

(56) Entgegenhaltungen:
- EP-A1- 1 025 987
- EP-A1- 1 811 210
- WO-A1-2007/096664
- CH-A- 515 641
- DE-A1- 2 332 490
- DE-A1- 19 833 093
- DE-U1- 9 113 754

## Beschreibung

Die Erfindung betrifft eine Befehls- und Meldevorrichtung, die einen Betätiger mit einem rohrförmigen Körper aufweist, wobei der rohrförmige Körper durch eine Frontplatte geführt ist und zwischen rohrförmigem Körper und Frontplatte eine Dichtung angeordnet ist.

Eine derartige Befehls- und Meldevorrichtung kommt bei Maschinen oder elektrischen Anlagen zum Einsatz, die über Befehlsgeräte, wie zum Beispiel Drucktaster, Wahlschalter usw., die auf die Steuerung einwirken, bedient werden. Diese Befehlsgeräte werden in Schalttafeln, Bedientableaus, Schaltschranktüren oder Gehäusedeckeln montiert. Befehlsgeräte sind in der Regel modular aufgebaut. Das bedeutet, sie bestehen aus einem Betätiger, einem Befestigungsteil wie zum Beispiel einer Ringmutter, oder einem speziellen Montagehalter und einem oder mehreren Schaltelementen, die als Öffner- oder Schließerschaltglieder ausgeführt sind. Zur Montage wird der Betätiger in der Regel von vorn durch eine Öffnung in der Schalttafel geführt und von hinten mittels eines Befestigungsteils montiert. Die Schaltelemente werden mit Schrauben, Schnapphaken oder Riegel mechanisch am Betätiger oder am Befestigungsteil fixiert. Die elektrische Verbindung der Schaltelemente mit der Steuerung erfolgt über Anschlussklemmen.

Bei Sicherheitsanwendungen wie zum Beispiel Not-Aus-Befehlsgeräten, ist es Vorschrift, dass das Signal durch das Öffnen von zwangsöffnenden Kontakten erzeugt wird. Das heißt, dass bei einem unbetätigten Not-Aus-Befehlsgerät die Kontakte und damit der zugehörige Stromkreis geschlossen sind. Im Störungs- oder Notfall wird durch Schlagen auf den Not-Aus-Betätiger, der sich vor der Schalttafel befindet, der Öffnerkontakt unterbrochen und die Anlage oder Maschine in einen sicheren Zustand versetzt. Dies funktioniert jedoch nur, wenn die räumliche Zuordnung zwischen Betätiger und Schaltelement sichergestellt ist. Durch mangelhafte Montage oder durch Gewalteinwirkung kann es vorkommen, dass die Schaltelemente mechanisch vom Betätiger getrennt werden. In diesem Fall ist das Not-Aus-Befehlsgerät nicht mehr funktionsfähig, das heißt, bei einer Betätigung im Notfall werden die Kontakte nicht geöffnet, und damit erfolgt auch keine Beseitigung des Gefahrenzustands. Dies kann zu fatalen Schäden für Mensch und Maschine führen. Daher kommt der sicheren Verbindung zwischen Betätiger und Schaltelement eine wesentliche Bedeutung zu.

Betätiger müssen vielschichtigen Anforderungen gerecht werden. So sollten sie sich zum Beispiel einfach montieren lassen und für den Kunden eine gewisse Attraktivität aufweisen. Die wichtigste Anforderung jedoch ist, die Anlagen zu schalten oder in den sicheren Zustand zu versetzen und dies auch an Orten, die allen möglichen Umwelteinflüssen ausgesetzt sind. Dafür stellt die entsprechende Schutzart die Dichtungsanforderung an diese Produktgruppe dar, um die anhaltende Betriebsfähigkeit der Geräte zu gewährleisten. Um diesen Zustand zu erreichen, sind verschiedene Dichtungskonzepte auf dem Markt.

Zur Abdichtung der Betätiger gegenüber der Frontplatte und zur Vorfixierung in der Frontplatte wurden bisher auf alle Betätiger Dichtungen fest montiert oder in anderer Form fest angebracht, zum Beispiel durch ein Zweikomponentenspritzgußverfahren, d. h., die Dichtung wurde direkt auf den rohrförmigen Körper aufgebracht.

Der Nachteil der bisher aus dem Stand der Technik bekannten Lösungen besteht darin, dass die technischen und konstruktiven Gestaltungsmöglichkeiten erheblich eingeschränkt sind.

Die DE 91 13 754 U1 offenbart einen Kurzhub-Drucktaster als Notschalter, der aus einem in einer Öffnung in einer Wand einsteckbaren Gehäuse zu Aufnahme einer Betätigungs- und einer Schalteinrichtung aufgebaut ist, wobei das Gehäuse an seiner Frontseite mittels eines umlaufenden Kragens an der Wandung anliegt und an seiner Rückseite durch ein Befestigungselement in der Wandung gesichert ist. Dabei ist außerdem vorgesehen, dass an dem umlaufenden Kragen eine Dichtung an der tragenden Wandung anliegt. Die Dichtung ist dabei mit saugnapfartig wirkenden Vertiefungen versehen, die sicherstellen, dass das Gehäuse, welches in die Öffnung der Wand eingesteckt wird, auch für die weitere Montage einerseits sicher und andererseits drehfest gehalten ist.

Die DE 198 33 093 A1 beschreibt ein Befehls- und/oder Meldegerät, das ein Gehäuseteil und ein Kopfteil zur Montage in einer Montagebohrung aufweist, wobei die Montagebohrung kleiner als das Kopfteil und größer als das Gehäuseteil ist, wobei das Gehäuseteil in der Nähe des Kopfteils ein Außengeländer aufweist, womit das Befehls- und /oder Meldegerät mit einem Mutterteil befestigbar ist. Dies wird dadurch erreicht, dass im Übergangsbereich zwischen dem zylinderförmigen Gehäuse und dem Kopfteil eine weich elastische Masse angeordnet ist, die im Zweikomponenten-Spritzgussverfahren aufgebracht wird, wobei das Befehls- und/oder Meldegeräte aus einer hart elastischen Kunststoffmasse besteht und wobei die weich elastische Masse neben einer eigentlichen Dichtungsfunktion eine Fixierungsfunktion aufweist, die durch rippenförmige Stege optimiert wird.

Die EP 1 811 210 A1 beschreibt eine Radialdichtung zur Abdichtung zwischen einem radial innerhalb der Radialdichtung angeordneten ersten Bauteil und einem radial außerhalb der Radialdichtung angeordneten zweiten Bauteil mit einem nicht rotationssymmetrischen Dichtungskörper mit einer inneren Dichtfläche zum Anlegen an das erste Bauteil und einer äußeren Dichtfläche zum Anlegen an das zweite Bauteil, mit einem ersten Versteifungselement, welches die innere Dichtfläche gegen eine radial nach außen wirkende Presskraft abstützt und mit einem zweiten Verstärkungselement, welches die äußere Dichtfläche gegen eine radial nach innen wirkende Presskraft abstützt. Der Dichtungskörper der Radialdichtung ist dabei aus einem elastomeren Kunststoff gebildet, wie zum Beispiels aus Ethylen-Acrylat-Kautschuk oder aus einem Fluor-Kautschuk.

Demgemäß besteht die Aufgabe der vorliegenden Erfindung darin, eine Befehls- und Meldevorrichtung zu schaffen, die hinsichtlich der Dichtwirkung zwischen Frontplatte und Betätiger ein anspruchsvolles Anforderungsprofil erfüllt und dabei eine Mehrzahl an konstruktiven Gestaltungsmöglichkeiten ermöglicht.

Diese Aufgabe wird durch eine Befehls- und Meldevorrichtung mit den Merkmalen des Patentanspruchs 1. Vorteilhafte Aus- und Weiterbildungen, welche einzeln oder in Kombination miteinander eingesetzt werden können, sind der Gegenstand der abhängigen Ansprüche.

Erfindungsgemäß wird diese Aufgabe durch eine Befehls- und Meldevorrichtung gelöst, die einen Betätiger mit einem rohrförmigen Körper aufweist, wobei der rohrförmige Körper durch eine Frontplatte geführt ist und zwischen rohrförmigem Körper und Frontplatte eine Dichtung angeordnet ist. Die Erfindung zeichnet sich dabei dadurch aus, dass die Dichtung ein aus mehreren Komponenten ausgebildetes Dichtungselement ist. Das Dichtungselement, vorzugsweise ein Dichtring ist dabei vorzugsweise einstückig ausgebildet und nicht fest, sondern lösbar auf den rohrförmigen Körper, der auch als Rosette bezeichnet wird, beziehungsweise auf die Frontplatte aufgesteckt. Das erfindungsgemäße Dichtungselement dient sowohl der Dichtung als auch der Fixierung und kann in einer Einhandmontage montiert werden.

Am rohrförmigen Körper kann ein Absatz ausgebildet sein, der als Querschnittserweiterung dient. Die Erfindung sieht vor, den Übergangsbereich von der Frontplatte zur Frontplattendichtung beziehungsweise zur Rosette im Kegelverhältnis zu gestalten, damit die Frontplattenbohrungstoleranzen ausgeglichen werden, wobei hier sowohl eine positive als auch eine negative Kegelform denkbar ist.

Das erfindungsgemäße Dichtungselement ist zwar einstückig ausgeformt, basiert aber vorzugsweise auf zwei oder mehreren Komponenten. Dabei ist die eine umhüllende Komponente als Außenbereich ausgebildet. Dieser Außenbereich ist Umwelteinflüssen ausgesetzt und ist daher aus widerstandsfähigem Material zusammengesetzt und weist zudem keine Biegeschlaffheit auf. Die zweite skelettbildende Komponente ist als Innenbereich des Dichtungselementes ausgebildet. Dieser Innenbereich ist aus flexiblem Dichtmaterial hergestellt und ist Umwelteinflüssen nicht direkt ausgesetzt. Als Komponenten werden thermoplastische Elastomere verwendet, wie z. B. Polyurethan, Polyamid, Polycarbonat und Polypropylen.

Das erfindungsgemäße Dichtungselement bietet einen Toleranzausgleich in der Frontplatte über eine schiefe Ebene, wobei die flexiblen Weichkomponentenanteile die Dichtung und die verwendete Hartkomponente die Widerstandsfähigkeit gegen Umwelteinflüsse verbessert. Dieses Zweikomponentendichtelement weist zudem durch die mögliche Einhandmontage deutlich verbesserte Montageeigenschaften auf und stellt eine technische Kombination aus Dichtung und Fixierung dar.

Das erfindungsgemäße Dichtungselement erfüllt insbesondere das Anforderungsprofil der Schutzart IP69K sowie andere Schutzarten mit geringeren Anforderungen. Diese Schutzart gibt die Eignung von elektrischen Betriebsmitteln, wie zum Beispiel Geräten, Leuchten und Installationsmaterial für verschiedene Umgebungsbedingungen an, sowie den Schutz von Menschen gegen die potentielle Gefährdung bei deren Benutzung. Bei vielen Anwendungen müssen elektrische und elektronische Geräte unter erschwerten Umweltbedingungen über viele Jahre sicher arbeiten. Außer dem zulässigen Temperaturbereich stellt die chemische Belastung, hierunter wird die Beständigkeit gegen aggressive Medien in der Industrie wie Dämpfe, Säuren, Laugen, Öl oder Kraftstoffe verstanden, eine Einsatzbeschränkung dar. Zudem muss das Eindringen von Nässe und Fremdkörpern, wie zum Beispiel Staub, für eine zuverlässige Funktion verhindert werden.

Bezüglich ihrer Eignung für verschiedene Umgebungsbedingungen werden die Systeme in entsprechende Schutzarten, so genannten IP-Codes eingeteilt. Die Abkürzung "IP" steht laut DIN für "International Protection", wird aber im englischen Sprachraum als "Ingress Protection" (Eindringschutz) verwendet. Den in der Schutzartbezeichnung immer vorhandenen Buchstaben "IP" werden zwei Kennziffern angehängt. Diese zeigen an, welchen Schutzumfang ein Gehäuse bezüglich Berührung, beziehungsweise Fremdkörper (erste Kennziffer) und Feuchtigkeit, beziehungsweise Wasser (zweite Kennziffer), bietet. Die hier vorliegende Schutzart IP69K zeigt gemäß der Ziffer "6" an, dass das Gerät staubdicht sein soll und gemäß der Ziffer "9K" Schutz gegen Wasser bei Hochdruck- und Dampfstrahlreinigung bieten soll.

Das hier vorgestellte Mehrkomponentendichtelement zeichnet sich weiterhin dadurch aus, dass die Bohrungstoleranz in der Frontplatte weitestgehend ausgeglichen werden kann, wodurch ein idealer Selfsticking Effekt und somit eine ideale Klemmwirkung bzw. Vorfixierung entsteht. Außerdem verfügt das Dichtungselement durch die Mehrkomponentenzusammensetzung, wobei hier auch mehr als zwei Komponenten denkbar sind, über eine ausreichende Festigkeit, um die Montage sicher zu gewährleisten bzw. die Demontage zu erleichtern.

Die Erfindung zeichnet sich dadurch aus, dass das erfindungsgemäße Mehrkomponentendichtungselement die Bohrungstoleranz in der Frontplatte vollständig ausgleicht und zudem einen idealen Selfsticking Effekt bietet. Zudem weist das Dichtungselement durch die Mehrkomponentenzusammensetzung eine ausreichende Festigkeit auf, um die Montage sicher zu gewährleisten bzw. die Demontage zu erleichtern.

Weitere Vorteile und Ausführungen der Erfindung werden nachfolgend anhand von Ausführungsbeispielen sowie anhand der Zeichnung erläutert.
Dabei zeigen schematisch:
Fig. 1 in einer perspektivischen Darstellung eine erfindungsgemäße Befehls- und Meldevorrichtung mit einem in einer Frontplatte vormontierten Dichtungselement;
Fig. 2 in einer perspektivischen Darstellung ein weiteres Ausführungsbeispiel einer Befehls- und Meldevorrichtung mit einem in einer Frontplatte vormontierten Dichtungselement;
Fig. 3 in einer perspektivischen Darstellung eine erfindungsgemäße Befehls- und Meldevorrichtung mit einem am rohrförmigen Körper des Betätigers vormontierten Dichtungselement;
Fig. 4 in einer perspektivischen Darstellung ein weiteres Ausführungsbeispiel einer Befehls- und Meldevorrichtung mit einem am rohrförmigen Körper des Betätigers vormontierten Dichtungselement;
Fig. 5 in einer perspektivischen Darstellung verschiedene Ausführungsbeispiele eines Betätigers mit rohrförmigem Körper für die erfindungsgemäße Befehls- und Meldevorrichtung;
Fig. 6 in einer Schnittdarstellung ein erfindungsgemäßes Dichtungselement ohne Weichkomponente;
Fig. 7 in einer Schnittdarstellung ein erfindungsgemäßes Dichtungselement mit Weichkomponente;
Fig. 8 in einer perspektivischen Darstellung ein Ausführungsbeispiel des erfindungsgemäßen Dichtungselementes.

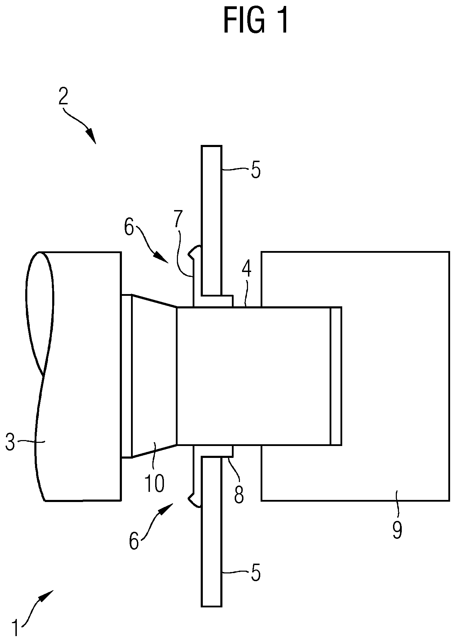

Fig. 1 zeigt eine erfindungsgemäße Befehls- und Meldevorrichtung 1 mit einem Betätiger 2, der einen Druckknopf 3 und einen rohrförmigen Körper 4 aufweist. Der Betätiger 2 ist über den rohrförmigen Körper 4 in eine Frontplatte 5 eingeführt, wobei zwischen der Frontplatte 5 und der Außenwand des rohrförmigen Körpers 4 ein Dichtungselement 6 angeordnet ist. Das Dichtungselement 6 ist eine Mehrkomponentendichtung und weist vorzugsweise zwei Komponenten auf. Die eine Komponente umfasst einen Dichtungsbereich 7, der auf der Frontplatte 5 aufliegt. Die zweite Komponente umfasst einen Klemmbereich 8, der zwischen der Außenwand der Rosette 4 und der Frontplatte 5 angeordnet ist.

Das erfindungsgemäße Dichtungselement 6 gestaltet den Übergangsbereich von Frontplatte zur Frontplattendichtung beziehungsweise zum rohrförmigen Körper im Kegelverhältnis, damit die Frontplattenbohrungstoleranzen ausgeglichen werden. Das hier vorgestellte vorzugsweise zwei Komponenten beinhaltende Dichtungskonzept bietet den Vorteil, dass der Dichtungsbereich 7, der im Wesentlichen den Umwelteinflüssen ausgesetzt ist, des Dichtelementes 6 aus widerstandsfähigem Material hergestellt ist, wobei dieses Material im Wesentlichen nicht biegeschlaff ist. Der Klemmbereich 8 des Dichtelementes 6 ist dagegen aus einem elastischen Material hergestellt.

Das erfindungsgemäße Dichtungselement 6 kann in einem ersten Schritt in die Frontplatte 5 montiert werden, wodurch ein deutlich höherer Dichtungsschutz und damit auch beispielsweise die Dichtigkeit der Schutzart IP69K erreicht wird. Zusätzlich ergibt sich aus der vorgezogenen Dichtungsmontage in die Frontplatte 5 eine erhebliche Gestaltungsfreiheit für die Dichtungsgeometrie.

Alternativ kann jedoch weiterhin die Vormontage des Dichtungselementes 6 auch auf einen Durchmesser reduzierten Bereich des rohrförmigen Körpers erfolgen, die die gewohnte Montage des Betätigers 2 mit montierter Dichtung in die Frontplatte 5 realisiert. Zudem ist als weiterer Vorteil zu nennen, dass der Selfsticking Effekt durch das Kegelverhältnis am rohrförmigen Körper 4 und dem erfindungsgemäßen Dichtungselement 6 deutlich verstärkt wird.

Eine Erweiterung des erfindungsgemäßen Dichtungselements 6 besteht beispielsweise darin, weitere Komponenten mit verbesserten Eigenschaften zwischen dem Dichtungsbereich 7 und dem Klemmbereich 8 des Dichtungselementes 6 anzuordnen, die diesen Übergangsbereich optimal ausgestalten.

Der Betätiger 2 ist in seiner Position durch einen Halter 9, der auf der gegenüberliegenden Seite zum Betätiger 2 an der Frontplatte 5 angeordnet ist, fixiert. Vorzugsweise kann der rohrförmige Körper 4 des Betätigers 2 direkt unter dem Druckknopf 3 einen Absatz 10 aufweisen, der als Querschnittserweiterung in Richtung des Druckknopfes 3 ausgebildet ist.

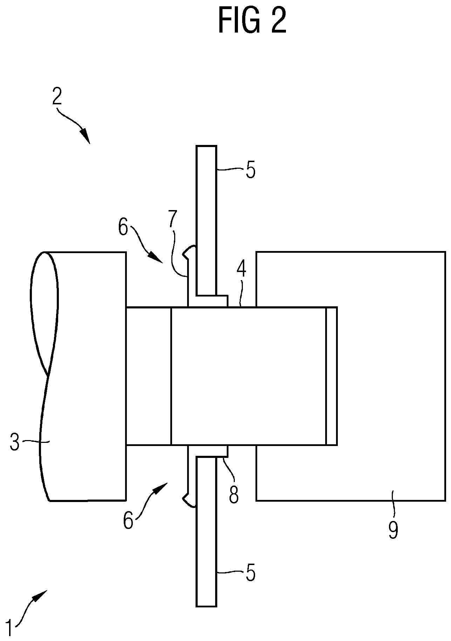

Fig. 2 zeigt ein weiteres Ausführungsbeispiel einer Befehls- und Meldevorrichtung 1 mit einem in einer Frontplatte vormontierten Dichtungselement 6. Dabei ist der rohrförmige Körper 4 des Betätigers 2 in diesem Bespiel in einer komplett zylindrischen Form ohne Absatz 10 dargestellt.

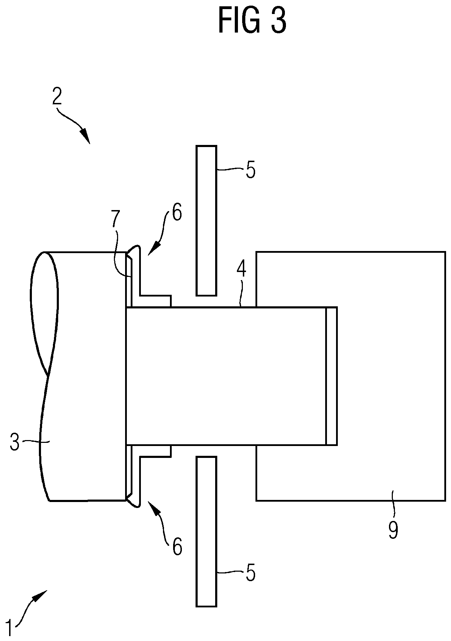

In der Fig. 3 ist eine erfindungsgemäße Befehls- und Meldevorrichtung 1 mit einem am rohrförmigen Körper 4 vormontierten Dichtungselement 6 dargestellt, wobei der rohrförmige Körper 4 des Betätigers 2 in diesem Bespiel in einer komplett zylindrischen Form ohne Absatz 10 dargestellt.

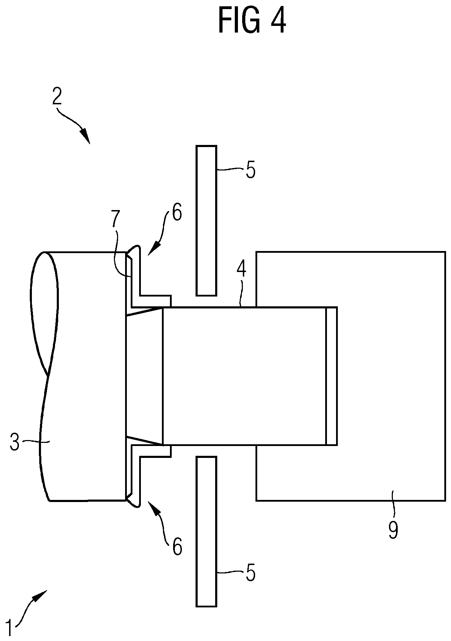

In der Fig. 4 ist eine erfindungsgemäße Befehls- und Meldevorrichtung 1 mit einem am rohrförmigen Körper 4 vormontierten Dichtungselement 6 dargestellt, wobei der rohrförmige Körper 4 des Betätigers 2 in diesem Bespiel eine Querschnittsverengung unterhalb des Druckknaufes 3 aufweist.

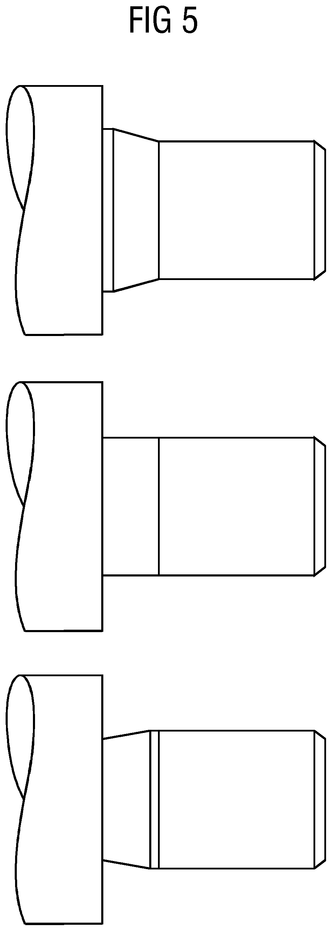

Fig. 5 zeigt verschiedene Ausführungsbeispiele des Betätigers 2 mit rohrförmigem Körper 4 für die erfindungsgemäße Befehls- und Meldevorrichtung 1. Der rohrförmige Körper 4 kann unterhalb des Druckknaufes 3 mit Absatz 10 ausgeführt sein, der als Querschnittserweiterung zum Druckknopf 3 hin ausgeführt ist. In einem weiteren Ausführungsbeispiel kann der rohrförmige Körper 4 komplett zylindrisch ohne Querschnittsverengung ausgebildet sein. Schließlich kann der rohrförmige Körper 4 zum Druckknopf 3 hin mit einer Querschnittsverengung ausgebildet sein.

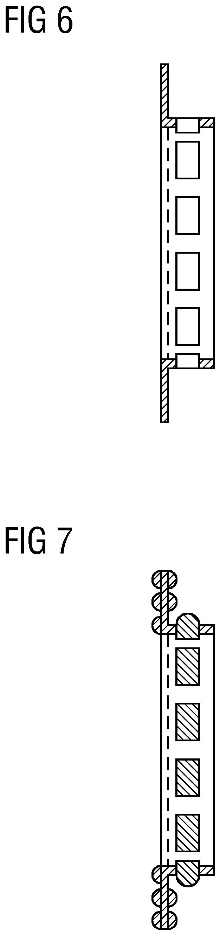

In Fig. 6 ist ein Ausführungsbeispiel des erfindungsgemäßen Dichtungselements 6 ohne Weichkomponente dargestellt, das den Skelettaufbau des Dichtungselementes 6 zeigt. Fig. 7 zeigt das Dichtungselement 6 mit Weichkomponente.

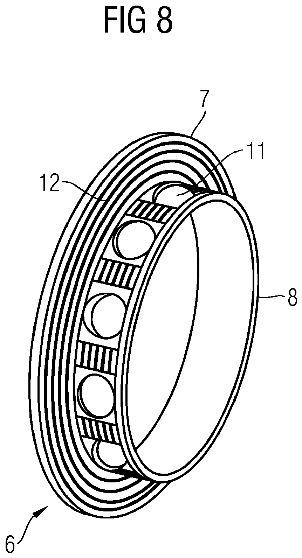

In Fig. 8 ist ein Ausführungsbeispiel des erfindungsgemäßen Dichtungselementes 6 dargestellt. Im Klemmbereich 8 des Dichtungselementes 6 sind geometrische Ausgleichselemente 11 angeordnet. Die geometrischen Ausgleichselemente 11 können vorzugsweise als Noppen, Rippen oder Flügel ausgebildet sein. Diese geometrischen Ausgleichselemente 11 ermöglichen einen Spannungsausgleich zwischen der Frontplattenbohrung und dem rohrförmigen Körper 4 und sind daher ebenfalls als Weichkomponenten ausgeführt. Im Dichtungsbereich 7 sind Riffelungsgeometrien 12 angeordnet. Die Riffelungsgeometrien 12 verbessert die Widerstandsfähigkeit des Dichtungsbereichs 7.

Die Erfindung zeichnet sich dadurch aus, dass das einfindungsgemäße Mehrkomponentendichtelement die Bohrungstoleranz in der Frontplatte vollständig ausgleicht und zudem einen idealen Selfsticking Effekt bietet. Zudem weist das Dichtungselement durch die Mehrkomponentenzusammensetzung eine ausreichende Festigkeit auf, um die Montage sicher zu gewährleisten bzw. die Demontage zu erleichtern.

## Patentansprüche

1. Befehls- und Meldevorrichtung (1) aufweisend einen Betätiger (2), eine Dichtung mit einem Dichtungsbereich und einem Klemmbereich und eine Frontplatte, wobei die Befehls- und Meldevorrichtung (1) einen Betätiger (2) mit einem rohrförmigen Körper (4) aufweist, wobei der rohrförmige Körper (4) durch die Frontplatte (5) geführt ist und zwischen rohrförmigen Körper (4) und Frontplatte (5) die Dichtung angeordnet ist, **dadurch gekennzeichnet, dass** die Dichtung ein aus mehreren Komponenten ausgebildetes Dichtungselement (6) ist, wobei eine umhüllende Komponente als Außenbereich und eine zweite skelettbildende Komponente als Innenbereich des Dichtungselementes (6) ausgebildet ist, wobei der Außenbereich Umwelteinflüssen ausgesetzt ist und daher aus einem widerstandsfähigem Material zusammengesetzt ist und zudem keine Biegeschlaffheit aufweist wobei dieser Innenbereich aus flexiblem Dichtmaterial hergestellt ist und Umwelteinflüssen nicht direkt ausgesetzt ist und wobei als Komponenten thermoplastische Elastomere verwendet werden, wie z. B. Polyurethan, Polyamid, Polycarbonat und Polypropylen.

2. Befehls- und Meldevorrichtung (1) nach Anspruch 1, **dadurch gekennzeichnet, dass** das Dichtungselement (6) einen Dichtungsbereich (7) aufweist, der auf der Frontplatte (5) aufliegt.

3. Befehls- und Meldevorrichtung (1) nach Anspruch (2), **dadurch gekennzeichnet, dass** der Dichtungsbereich (7) aus einem widerstandsfähigen Material ausgebildet ist.

4. Befehls- und Meldevorrichtung (1) nach einem der vorhergehenden Ansprüche, **dadurch gekennzeichnet, dass** das Dichtungselement (6) einen Klemmbereich (8) aufweist, der zwischen der Außenwand der Rosette, also des rohrförmigen Körpers (4), und der Frontplatte (5) angeordnet ist.

5. Befehls- und Meldevorrichtung (1) nach Anspruch 4, **dadurch gekennzeichnet, dass** der Klemmbereich (8) aus einem elastischen Material ausgebildet ist und komplett oder teilweise beschichtet ist.

6. Befehls- und Meldevorrichtung (1) nach Anspruch 4 oder 5, **dadurch gekennzeichnet, dass** der Klemmbereich (8) geometrische Ausgleichselemente (11) aufweist.

7. Befehls- und Meldevorrichtung (1) nach einem der Ansprüche 4 bis 6, **dadurch gekennzeichnet, dass** im Dichtungsbereich (7) des Dichtungselementes (6) Riffelungsgeometrien (12) angeordnet sind.

## Claims

1. Command and alert device (1) having an actuator (2), a seal with a sealing region and a clamping region, and a front plate, wherein the command and alert device (1) has an actuator (2) with a tubular body (4), the tubular body (4) being guided through the front plate (5) and the seal being arranged between the tubular body (4) and the front plate (5), **characterized in that** the seal is a sealing element (6) which is formed from multiple components, wherein an enveloping component is formed as an outer region and a second, skeleton-forming component is formed as an inner region of the sealing element (6), wherein the outer region is exposed to environmental influences and is therefore composed of a resistant material and also does not have any flexural yield, wherein this inner region is produced from flexible sealing material and is not directly exposed to environmental influences and wherein thermoplastic elastomers are used as components, such as for example polyurethane, polyamide, polycarbonate and polypropylene.

2. Command and alert device (1) according to Claim 1, **characterized in that** the sealing element (6) has a sealing region (7), which rests on the front plate (5).

3. Command and alert device (1) according to Claim 2, **characterized in that** the sealing region (7) is formed from a resistant material.

4. Command and alert device (1) according to one of the preceding claims, **characterized in that** the sealing element (6) has a clamping region (8), which is arranged between the outer wall of the rosette, thus of the tubular body (4), and the front plate (5).

5. Command and alert device (1) according to Claim 4, **characterized in that** the clamping region (8) is formed from an elastic material and is completely or partially coated.

6. Command and alert device (1) according to Claim 4 or 5, **characterized in that** the clamping region (8) has geometrical compensating elements (11).

7. Command and alert device (1) according to one of Claims 4 to 6, **characterized in that** grooving geometries (12) are arranged in the sealing region (7) of the sealing element (6).

## Revendications

1. Dispositif de commande et de signalisation (1) comprenant un actionneur (2), un joint avec une zone d'étanchéité et une zone de serrage et une plaque frontale, le dispositif de commande et de signalisation (1) comprenant un actionneur (2) avec un corps tubulaire (4), dans lequel le corps tubulaire (4) est guidé à travers la plaque frontale (5) et le joint est disposé entre le corps tubulaire (4) et la plaque frontale (5), **caractérisé en ce que** le joint est un élément d'étanchéité (6) constitué de plusieurs composants, dans lequel un composant enveloppant est constitué sous forme de zone extérieure et un deuxième composant formant armature est constitué sous forme de zone intérieure de l'élément d'étanchéité (6), dans lequel la zone extérieure est exposée à des influences environnementales et est donc composée d'un matériau résistant et ne présente en outre aucune mollesse au pliage, dans lequel cette zone intérieure est constituée d'un matériau d'étanchéité souple et n'est pas exposée directement à des influences environnementales et dans lequel des élastomères thermoplastiques sont utilisés en tant qu'éléments, comme par exemple le polyuréthane, le polyamide, le polycarbonate et le polypropylène.

2. Dispositif de commande et de signalisation (1) selon la revendication 1, **caractérisé en ce que** l'élément d'étanchéité (6) comprend une zone d'étanchéité (7) qui s'appuie sur la plaque frontale (5).

3. Dispositif de commande et de signalisation (1) selon la revendication 2, **caractérisé en ce que** la zone d'étanchéité (7) est constituée d'un matériau résistant.

4. Dispositif de commande et de signalisation (1) selon l'une des revendications précédentes, **caractérisé en ce que** l'élément d'étanchéité (6) comprend une zone de serrage (8) qui est disposée entre la paroi extérieure de la rosette, à savoir du corps tubulaire (4), et la plaque frontale (5).

5. Dispositif de commande et de signalisation (1) selon la revendication 4, **caractérisé en ce que** la zone de serrage (8) est constituée d'un matériau élastique et est complètement ou partiellement recouverte.

6. Dispositif de commande et de signalisation (1) selon la revendication 4 ou 5, **caractérisé en ce que** la zone de serrage (8) comprend des éléments de compensation géométriques (11).

7. Dispositif de commande et de signalisation (1) selon l'une des revendications 4 à 6, **caractérisé en ce que** dans la zone d'étanchéité (7) de l'élément d'étanchéité (6) sont disposées des géométries rainurées (12).
